# EUROPÄISCHE PATENTSCHRIFT

(11) **EP 2 250 044 B1**
(45) Veröffentlichungstag und Bekanntmachung des Hinweises auf die Patenterteilung: **29.10.2014**
(21) Anmeldenummer: 09716465.1
(22) Anmeldetag: 13.02.2009
(51) Int. Cl.: H02M 5/44, B60M 3/00, H02M 5/14

(54) **EINRICHTUNG ZUM ANSCHLIESSEN EINER EINPHASIGEN VERSORGUNGSLEITUNG AN EIN DREIPHASIGES VERSORGUNGSNETZ**
DEVICE FOR CONNECTING A SINGLE-PHASE POWER SUPPLY LINE TO A THREE-PHASE POWER SUPPLY NETWORK
DISPOSITIF DE RACCORDEMENT D'UNE LIGNE D'ALIMENTATION MONOPHASÉE À UN RÉSEAU D'ALIMENTATION TRIPHASÉE

(30) Priorität: 03.03.2008 DE 102008012325
(43) Veröffentlichungstag der Anmeldung: 17.11.2010
(73) Patentinhaber: Siemens Aktiengesellschaft, 80333 München (DE)
(72) Erfinder: GRUBER, Rainer, 91560 Heilsbronn (DE); HALFMANN, Ulrich, 91094 Bräuningshof (DE); RECKER, Wolfgang, 91096 Möhrendorf (DE)
(86) Internationale Anmeldenummer: PCT/EP2009/051708
(87) Internationale Veröffentlichungsnummer: WO 2009/109453

(56) Entgegenhaltungen:
- AU-B2- 639 916
- CN-A- 101 183 792
- DE-C1- 19 828 404
- GB-A- 2 247 576

## Beschreibung

Die Erfindung betrifft eine Einrichtung zum Anschließen mindestens einer einphasigen Versorgungsleitung gemäß Anspruch 1 oder Anspruch 2, die insbesondere die Oberleitung einer Eisenbahnstrecke speist, an ein dreiphasiges Versorgungsnetz, wobei mindestens ein Transformator primärseitig mit dem Versorgungsnetz und sekundärseitig mit der mindestens einen einphasigen Versorgungsleitung und mit einem Erdungspunkt oder mit einer Rückleitung in Verbindung steht.

"Einphasige Versorgungsleitung" kann für ein sogenanntes Autotransformatorsystem stehen.

Zur Versorgung eines Verbrauchers steht ein dreiphasiges Drehstromnetz zur Verfügung. An dieses dreiphasige Drehstrom-Versorgungsnetz müssen häufig einphasige Versorgungsleitungen angeschlossen werden, die z. B. die Oberleitung einer Eisenbahnstrecke speisen. Bei der Überleitung elektrischer Energie aus dem dreiphasigen Drehstrom-Versorgungsnetz in eine oder mehrere einphasige Versorgungsleitungen kommt es zu erheblichen Unsymmetrien im Drehstrom-Versorgungsnetz. Diese führen zu unerwünschten Strömen und auch zu unerwünschten Spannungen.

Eine Einrichtung gemäß dem Oberbegriff der Ansprüche 1 und 2 ist aus GB 2 247 576 A bekannt.

Eine Einrichtung zum Anschließen einphasiger Versorgungsleitungen an ein dreiphasiges Versorgungsnetz, mit der solche Unsymmetrien verringert oder sogar vermieden werden sollen, ist in der DE 198 28 404 C1 beschrieben. Die dort erwähnte so genannte V-Schaltung benötigt stets zwei Transformator-Wicklungspaare, die zwei elektrisch voneinander isolierte Streckenabschnitte über separate einphasige Versorgungsleitungen versorgen. Um Unsymmetrien weitgehend zu vermeiden, benötigt diese Schaltung auch eine zusätzliche Phasentrenn-stelle. Zur weiteren Verringerung der Unsymmetrien sind zusätzliche induktive und kapazitive Lasten vorgesehen.

Der Erfindung liegt die Aufgabe zugrunde, eine Einrichtung zum Anschließen mindestens einer einphasigen Versorgungsleitung an ein dreiphasiges Versorgungsnetz anzugeben, die mit möglichst wenigen Phasentrennstellen, insbesondere auch ohne Phasentrennstelle, auskommt, um die erwünschte Reduzierung der Unsymmetrien zu erreichen.

Die Aufgabe wird gemäß der Erfindung dadurch gelöst, dass mit der mindestens einen einphasigen Versorgungsleitung und mit dem Erdungspunkt eine Symmetriereinrichtung in Verbindung steht.

Als Erdungspunkt kann eine Rückleitung dienen.

Durch den Einsatz dieser speziellen Symmetriereinrichtung ist es erstmals in einfacher und kostengünstiger Weise möglich, Unsymmetrien, die bei der Überleitung elektrischer Energie aus dem dreiphasigen Drehstrom-Versorgungsnetz in eine oder mehrere einphasige Versorgungsleitungen entstehen, zu beseitigen, und zwar unabhängig vom Zustand der mindestens einen einphasigen Versorgungsleitung. Unerwünschte Ströme im dreiphasigen Versorgungsnetz werden dabei auf der Sekundärseite kompensiert.

Die Symmetriereinrichtung ist ein dreiphasiger selbstgeführter Spannungszwischenkreisstromrichter.

Es hat sich herausgestellt, dass derartige Stromrichter besonders vorteilhaft als Symmetriereinrichtung zu verwenden sind. Durch die Symmetriereinrichtung werden vorteilhaft Stromkomponenten in die einphasigen Versorgungsleitungen eingeprägt, die die Unsymmetrien beseitigen.

Es wird der besondere Vorteil erzielt, dass man mit standardisierten Bauteilen auskommt. Sogar eine Nachrüstung bestehender Einrichtungen ist schnell und zuverlässig möglich.

Beispielsweise sind der Symmetriereinrichtung eingangsseitig eine induktive Last und eine kapazitive Last zugeordnet. Dadurch können Unsymmetrien noch kostengünstiger beseitigt werden.

Beispielsweise ist die Symmetriereinrichtung dreiphasig und die induktive Last ist zwischen die zweite und die dritte Phase und die kapazitive Last ist zwischen die erste und die dritte Phase der Symmetriereinrichtung geschaltet. Dadurch wird ein optimaler Nutzen erzielt.

In einer ersten Ausführung der Erfindung ist nur eine einzige einphasige Versorgungsleitung vorhanden und es ist nur ein einziger Transformator vorhanden, der dreiphasig ist, wobei die erste von drei Ausgangsphasen des Transformators mit der einphasigen Versorgungsleitung, die zweite der drei Ausgangsphasen des Transformators mit der ersten Phase der Symmetriereinrichtung, die dreiphasig ist, und die dritte der drei Ausgangsphasen des Transformators mit dem Erdungspunkt verbunden ist und wobei die zweite Phase der Symmetriereinrichtung mit der einphasigen Versorgungsleitung und die dritte Phase der Symmetriereinrichtung mit dem Erdungspunkt verbunden ist.

Mit dieser Schaltung wird der besondere Vorteil erzielt, dass keine Phasentrennstelle mehr erforderlich ist. Außerdem kommt man mit nur einem einzigen Transformator aus. Durch die gewählte Anschaltung der Symmetriereinrichtung werden Unsymmetrien beseitigt.

Nach einer zweiten Ausführung der Erfindung sind zwei durch eine Trennstelle getrennte einphasige Versorgungsleitungen vorhanden und die erste Phase der Symmetriereinrichtung, die dreiphasig ist, ist mit der ersten einphasigen Versorgungsleitung und die zweite Phase der Symmetriereinrichtung ist mit der zweiten einphasigen Versorgungsleitung verbunden, während die dritte Phase der Symmetriereinrichtung mit dem Erdungspunkt verbunden ist.

Hiermit wird der Vorteil erzielt, dass nur eine Symmetriereinrichtung notwendig ist, um zwei getrennte einphasige Versorgungsleitungen unter Vermeidung von Unsymmetrien zu versorgen.

Ausgehend von dieser Schaltung für zwei durch eine Trennstelle getrennte einphasige Versorgungsleitungen ist nach einem ersten Beispiel vorgesehen, dass ein Transformator vorhanden ist, der dreiphasig ist, und dass die erste von drei Ausgangsphasen des Transformators mit der ersten einphasigen Versorgungsleitung, die zweite der drei Ausgangsphasen des Transformators mit der zweiten einphasigen Versorgungsleitung und die dritte der drei Ausgangsphasen des Transformators mit dem Erdungspunkt verbunden ist.

Beispielsweise ist nur ein einziger Transformator vorhanden, der dreiphasig ist.

Es wird der Vorteil erzielt, dass nur ein Transformator erforderlich ist, um zwei getrennte einphasige Versorgungsleitungen zu versorgen.

Beispielsweise sind mindestens zwei Transformatoren vorhanden, die jeweils dreiphasig und parallel geschaltet sind. Verfügbarkeit und/oder Leistung werden dadurch vergrößert.

Ein dreiphasiger Transformator kann ein Transformator mit um 90° versetzten Sekundärspannungen bzw. ein Scott-Transformator sein.

Nach einem zweiten Beispiel ist vorgesehen, dass zwei Transformatoren vorhanden sind, die jeweils zweiphasig sind und dass die erste von zwei Ausgangsphasen des ersten Transformators mit der ersten einphasigen Versorgungsleitung und die erste von zwei Ausgangsphasen des zweiten Transformators mit der zweiten einphasigen Versorgungsleitung verbunden ist und dass von jedem Transformator jeweils die zweite von zwei Ausgangsphasen mit dem Erdungspunkt verbunden ist. Die Symmetriereinrichtung kann also auch vorteilhaft zusammen mit zweiphasigen Transformatoren eingesetzt werden.

Beispielsweise ist zu dem einen oder zu dem anderen der beiden zweiphasigen Transformatoren oder zu jeweils beiden zweiphasigen Transformatoren mindestens ein weiterer zweiphasiger Transformator parallel geschaltet.

Mit der Einrichtung nach der Erfindung wird insbesondere der Vorteil erzielt, dass Unsymmetrien bei der Versorgung einphasiger Versorgungsleitungen aus einem dreiphasigen Drehstrom-Versorgungsnetz mit einfachen Mitteln zuverlässig reduziert oder sogar beseitigt werden können. Auch ist eine Nachrüstung bestehender Einrichtungen möglich. Besonders geeignet ist die Einrichtung für die Energieversorgung der Oberleitung der Eisenbahn.

Ausführungsbeispiele der Einrichtung zum Anschließen einer einphasigen Versorgungsleitung an ein dreiphasiges Versorgungsnetz nach der Erfindung werden anhand der Zeichnung näher erläutert:
- Figur 1: zeigt eine Einrichtung mit nur einer einphasigen Versorgungsleitung ohne Trennstelle und mit einem dreiphasigen Transformator.
- Figur 2: zeigt eine Einrichtung mit zwei einphasigen Versorgungsleitungen, die durch eine Trennstelle getrennt sind, und mit nur einem dreiphasigen Transformator.
- Figur 3: zeigt eine Einrichtung mit zwei einphasigen Versorgungsleitungen, die durch eine Trennstelle getrennt sind, und mit zwei zweiphasigen Transformatoren.
- Figur 4: zeigt eine Symmetriereinrichtung mit zusätzlichen Mitteln zur Verringerung von Unsymmetrien.

In den Figuren bezeichnen gleiche Bezugszeichen gleiche Bauteile.

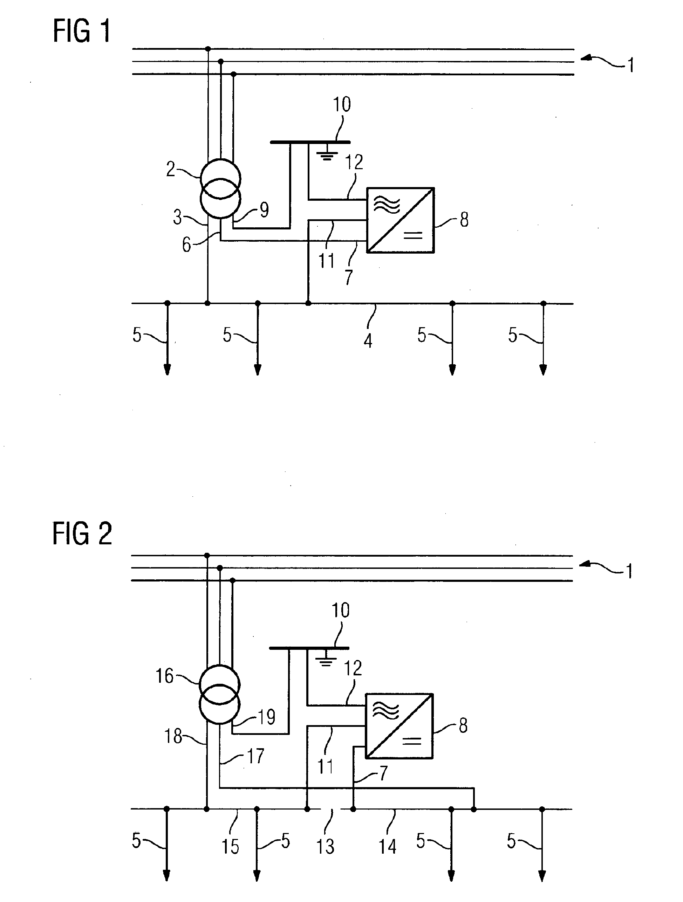

In Figur 1 ist an ein dreiphasiges Versorgungsnetz 1 primärseitig ein dreiphasiger Transformator 2 angeschlossen. Die erste Ausgangsphase 3 des Transformators 2 ist mit einer einphasigen Versorgungsleitung 4 verbunden. Von dieser einphasigen Versorgungsleitung 4 gehen Zuleitungen 5 aus, die die Oberleitung einer Eisenbahnstrecke speisen. Die zweite Ausgangsphase 6 des Transformators 2 ist mit der ersten Phase 7 einer Symmetriereinrichtung 8, die dreiphasig ist, verbunden. Die dritte Ausgangsphase 9 des Transformators 2 ist mit einem Erdungspunkt 10 verbunden. Die zweite Phase 11 der Symmetriereinrichtung 8 ist mit der einphasigen Versorgungsleitung 4 und die dritte Phase 12 der Symmetriereinrichtung 8 ist mit dem Erdungspunkt 10 verbunden. Auf einfache Weise werden durch diese Schaltung unerwünschte Unsymmetrien vermieden.

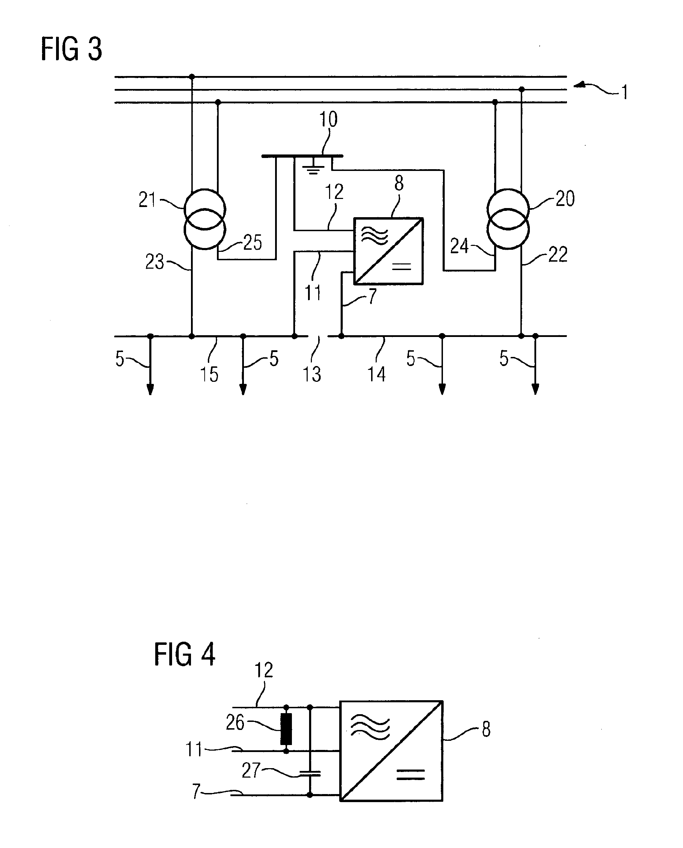

In den Figuren 2 und 3 sind zwei durch eine Trennstelle 13 getrennte einphasige Versorgungsleitungen 14, 15 vorhanden. Die erste Phase 7 der Symmetriereinrichtung 8, die dreiphasig ist, ist mit der ersten einphasigen Versorgungsleitung 14 und die zweite Phase 11 der Symmetriereinrichtung 8 ist mit der zweiten einphasigen Versorgungsleitung 15 verbunden. Die dritte Phase 12 der Symmetriereinrichtung 8 steht mit dem Erdungspunkt 10 in Verbindung.

In Figur 2 steht ein einziger dreiphasiger Transformator 16 primärseitig mit dem dreiphasigen Versorgungsnetz 1 in Verbindung. Die erste Ausgangsphase 17 des Transformators 16 steht mit der ersten einphasigen Versorgungsleitung 14 in Verbindung. Die zweite Ausgangsphase 18 des Transformators 16 steht mit der zweiten einphasigen Versorgungsleitung 15 in Verbindung. Die dritte Ausgangsphase 19 des Transformators 16 ist mit dem Erdungspunkt 10 verbunden. Parallel zum Transformator 16 können ein oder mehrere gleiche Transformatoren geschaltet sein.

In Figur 3 sind zwei zweiphasige Transformatoren 20 und 21 vorhanden. Primärseitig ist der erste zweiphasige Transformator 20 an die zweite und dritte Phase und der zweite zweiphasige Transformator 21 an die erste und dritte Phase des dreiphasigen Versorgungsnetzes 1 angeschlossen. Die erste Ausgangsphase 22 des ersten zweiphasigen Transformators 20 ist mit der ersten einphasigen Versorgungsleitung 14 verbunden. Entsprechend ist die erste Ausgangsphase 23 des zweiten zweiphasigen Transformators 21 mit der zweiten einphasigen Versorgungsleitung 15 verbunden. Von jedem der beiden zweiphasigen Transformatoren 20 und 21 ist jeweils die zweite Ausgangsphase 24 und 25 mit dem Erdungspunkt 10 verbunden. Die Symmetriereinrichtung 8 kann also auch mit zweiphasigen Transformatoren 20 und 21 kombiniert sein, was besonders bei einer Nachrüstung sinnvoll ist. Parallel zu den Transformatoren 20 und 21 oder parallel zu einem der beiden Transformatoren 20 oder 21 können ein oder mehrere gleiche Transformatoren geschaltet sein.

Figur 4 zeigt eine Symmetriereinrichtung 8, die den in den übrigen Figuren gezeigten Symmetriereinrichtungen 8 entspricht, und zur kostengünstigeren Vermeidung von Unsymmetrien mit einer induktiven Last 26 und mit einer kapazitiven Last 27 verbunden ist. Dazu ist die induktive Last 26 zwischen die zweite Phase 11 und die dritte Phase 12 der Symmetriereinrichtung 8 geschaltet, während die kapazitive Last 27 zwischen die erste Phase 7 und die dritte Phase 12 der Symmetriereinrichtung 8 geschaltet ist.

Mit der Einrichtung zum Anschließen mindestens einer einphasigen Versorgungsleitung 4, 14, 15 an ein dreiphasiges Versorgungsnetz 1 werden nach der Erfindung unerwünschte Unsymmetrien der Netzströme und der Netzspannung vermindert oder sogar beseitigt.

## Patentansprüche

1. Einrichtung zum Anschließen einer einphasigen Versorgungsleitung (4, 14, 15), die insbesondere die Oberleitung einer Eisenbahnstrecke speist, an ein dreiphasiges Versorgungsnetz (1),
- wobei mindestens ein Transformator (2, 16, 20, 21) primärseitig mit dem Versorgungsnetz (1) und sekundärseitig mit der einen einphasigen Versorgungsleitung (4, 14, 15) und mit einem Erdungspunkt (10) in Verbindung steht,
- wobei mit der einen einphasigen Versorgungsleitung (4, 14, 15) und mit dem Erdungspunkt (10) eine Symmetriereinrichtung (8) in Verbindung steht, die ein dreiphasiger selbstgeführter Spannungszwischenkreisstromrichter ist, **dadurch gekennzeichnet,**
- **dass** nur eine einzige einphasige Versorgungsleitung (4) vorhanden ist
- und **dass** nur ein einziger Transformator (2) vorhanden ist, der dreiphasig ist,
- und **dass** die erste (3) von drei Ausgangsphasen des Transformators (2) mit der einphasigen Versorgungsleitung (4), die zweite (6) der drei Ausgangsphasen des Transformators (2) mit der ersten Phase (7) der Symmetriereinrichtung (8) und die dritte (9) der drei Ausgangsphasen des Transformators (2) mit dem Erdungspunkt (10) verbunden ist
- und **dass** die zweite Phase (11) der Symmetriereinrichtung (8) mit der einphasigen Versorgungsleitung (4) und die dritte Phase (12) der Symmetriereinrichtung (8) mit dem Erdungspunkt (10) verbunden sind.

2. Einrichtung zum Anschließen mindestens einer einphasigen Versorgungsleitung (4, 14, 15), die insbesondere die Oberleitung einer Eisenbahnstrecke speist, an ein dreiphasiges Versorgungsnetz (1),
- wobei mindestens ein Transformator (2, 16, 20, 21) primärseitig mit dem Versorgungsnetz (1) und sekundärseitig mit der mindestens einen einphasigen Versorgungsleitung (4, 14, 15) und mit einem Erdungspunkt (10) in Verbindung steht,
- wobei mit der mindestens einen einphasigen Versorgungsleitung (4, 14, 15) und mit dem Erdungspunkt (10) eine Symmetriereinrichtung (8) in Verbindung steht, die ein dreiphasiger selbstgeführter Spannungszwischenkreisstromrichter ist, **dadurch gekennzeichnet,**
- **dass** zwei durch eine Trennstelle (13) getrennte einphasige Versorgungsleitungen (14, 15) vorhanden sind
- und **dass** die erste Phase (7) der Symmetriereinrichtung (8) mit der ersten einphasigen Versorgungsleitung (14), die zweite Phase (11) der Symmetriereinrichtung (8) mit der zweiten einphasigen Versorgungsleitung (15) und die dritte Phase (12) der Symmetriereinrichtung (8) mit dem Erdungspunkt (10) verbunden ist.

3. Einrichtung nach Anspruch 2, **dadurch gekennzeichnet,**
- **dass** ein Transformator (16) vorhanden ist, der dreiphasig ist,
- und **dass** die erste (17) von drei Ausgangsphasen des Transformators (16) mit der ersten einphasigen Versorgungsleitung (14), die zweite (18) der drei Ausgangsphasen des Transformators (16) mit der zweiten einphasigen Versorgungsleitung (15) und die dritte (19) der drei Ausgangsphasen des Transformators (16) mit dem Erdungspunkt (10) verbunden ist.

4. Einrichtung nach Anspruch 3, **dadurch gekennzeichnet,**
- **dass** nur ein einziger Transformator (16) vorhanden ist, der dreiphasig ist.

5. Einrichtung nach Anspruch 3, **dadurch gekennzeichnet,**
- **dass** mindestens zwei Transformatoren (16) vorhanden sind, die jeweils dreiphasig und parallel geschaltet sind.

6. Einrichtung nach Anspruch 2, **dadurch gekennzeichnet,**
- **dass** zwei Transformatoren (20, 21) vorhanden sind, die jeweils zweiphasig sind,
- und **dass** die erste (22) von zwei Ausgangsphasen des ersten Transformators (20) mit der ersten einphasigen Versorgungsleitung (14) und die erste (23) von zwei Ausgangsphasen des zweiten Transformators (21) mit der zweiten einphasigen Versorgungsleitung (15) verbunden ist,
- und **dass** von jedem Transformator (20, 21) jeweils die zweite (24, 25) von zwei Ausgangsphasen mit dem Erdungspunkt (10) verbunden ist.

7. Einrichtung nach Anspruch 6, **dadurch gekennzeichnet,**
- **dass** zu dem einen oder zu dem anderen der beiden zweiphasigen Transformatoren (20, 21) oder zu jeweils beiden zweiphasigen Transformatoren (20, 21) mindestens ein weiterer zweiphasiger Transformator parallel geschaltet ist.

8. Einrichtung nach einem der Ansprüche 1 bis 7, **dadurch gekennzeichnet,**
- **dass** der Symmetriereinrichtung (8) eingangsseitig eine induktive Last (26) und eine kapazitive Last (27) zugeordnet sind.

9. Einrichtung nach Anspruch 8, **dadurch gekennzeichnet,**
- **dass** die induktive Last (26) zwischen die zweite Phase (11) und die dritte Phase (12) und die kapazitive Last (27) zwischen die erste Phase (7) und die dritte Phase (12) der Symmetriereinrichtung (8) geschaltet ist.

## Claims

1. Device for connecting one single-phase supply line (4, 14, 15), which in particular feeds the overhead line of a railroad track, to a three-phase power supply system (1), - wherein at least one transformer (2, 16, 20, 21) is connected from the primary side to the power supply system (1) and on the secondary side to the one single-phase supply line (4, 14, 15) and to a ground point (10),
- wherein a balancing device (8) is connected to the one single-phase supply line (4, 14, 15) and to the ground point (10),
which is a three-phase self-commutated voltage intermediatecircuit converter,
- **characterized in that** there is only one single-phase supply line (4) and
- **in that** there is only one single transformer (2), which has three phases, and
- **in that** the first (3) of three output phases of the transformer (2) is connected to the single-phase supply line (4), the second (6) of the three phases of the transformer (2) is connected to the first phase (7) of the balancing device (8), and the third (9) of the three output phases of the transformer (2) is connected to the ground point (10), and
- **in that** the second phase (11) of the balancing device (8) is connected to the single-phase supply line (4), and the third phase (12) of the balancing device (8) is connected to the ground point (10).

2. Device for connecting at least one single-phase supply line (4, 14, 15), which in particular feeds the overhead line, to a three-phase power supply system (1),
- wherein at least one transformer (2, 16, 20, 21) is connected from the primary side to the power supply system (1) and on the secondary side to the at least one single-phase supply line (4, 14, 15) and to a ground point (10),
- wherein a balancing device (8) is connected to the at least one single-phase supply line (4, 14, 15) and to the ground point (10),
**characterized in that**
- two single-phase supply lines (14, 15), which are isolated by an isolation point (13), are provided, and
- **in that** the first phase (7) of the balancing device (8), is connected to the first single-phase supply line (14), the second phase (11) of the balancing device (8) is connected to the second single-phase supply line (15), and the third phase (12) of the balancing device (8) is connected to the ground point (10).

3. Device according to Claim 2, **characterized**
- **in that** a transformer (16) is provided, which has three phases,
- and **in that** the first (17) of three output phases of the transformer (16) is connected to the first single-phase supply line (14), the second (18) of the three output phases of the transformer (16) is connected to the second single-phase supply line (15) and the third (19) of the three output phases of the transformer (16) is connected to the ground point (10).

4. Device according to Claim 3, **characterized**
- **in that** only one single transformer (16) is provided, and has three phases.

5. Device according to Claim 3, **characterized**
- **in that** at least two transformers (16) are provided, which each have three phases and are connected in parallel.

6. Device according to Claim 2, **characterized**
- **in that** two transformers (20, 21) are provided, which each have two phases, and
- **in that** the first (22) of two output phases of the first transformer (20) is connected to the first single-phase supply line (14) and the first (23) of two output phases of the second transformer (21) is connected to the second single-phase supply line (15), and
- **in that** the second (24, 25) of two output phases of each transformer (20, 21) is in each case connected to the ground point (10).

7. Device according to Claim 6, **characterized**
- **in that** at least one further two-phase transformer is connected in parallel with one or the other of the two two-phase transformers (20, 21) or with in each case both two-phase transformers (20, 21).

8. Device according to one of Claims 1 to 7, **characterized**
- **in that** the balancing device (8) has an associated inductive load (26) and an associated capacitive load (27) on the input side.

9. Device according to Claim 8, **characterized**
- **in that** the balancing device (8) has three phases, and in that the inductive load (26) is connected between the second phase (11) and the third phase (12) of the balancing device (8), and the capacitive load (27) is connected between the first phase (7) and the third phase (12) of the balancing device (8).

## Revendications

1. Dispositif de raccordement d'une ligne ( 4, 14, 15 ) d'alimentation monophasée, qui alimente notamment la ligne de contact d'une ligne de chemin de fer à un réseau ( 1 ) d'alimentation triphasé,
- dans lequel au moins un transformateur ( 2, 16, 20, 21 ) est en liaison, du côté primaire, avec le réseau ( 1 ) d'alimentation et, du côté secondaire, avec la une ligne ( 4, 14, 15 ) d'alimentation monophasée et avec un point ( 10 ) de mise à la terre,
- dans lequel est en liaison avec la ligne ( 4, 14, 15 ) d'alimentation monophasée et avec le point ( 10 ) de mise à la terre un dispositif ( 8 ) d'équilibrage, qui est un convertisseur de circuit intermédiaire de tension triphasé à commutation automatique,
**caractérisé**
- **en ce qu'**il n'y a qu'une ligne ( 4 ) d'alimentation monophasée unique,
- et **en ce qu'**il n'y a qu'un transformateur ( 2 ) unique qui est triphasé,
- et **en ce que** la première ( 3 ) de trois phases de sortie du transformateur ( 2 ) est reliée à la ligne ( 4 ) d'alimentation monophasée, la deuxième ( 6 ) des trois phases de sortie du transformateur ( 2 ) à la première phase ( 7 ) du dispositif d'équilibrage et la troisième ( 9 ) des trois phases de sortie du transformateur ( 2 ) au point ( 10 ) de mise à la terre,
- et **en ce que** la deuxième phase ( 11 ) du dispositif ( 8 ) d'équilibrage est reliée à la ligne ( 4 ) d'alimentation monophasée et la troisième phase ( 12 ) du dispositif ( 8 ) d'équilibrage au point ( 10 ) de mise à la terre.

2. Dispositif de raccordement d'une ligne ( 4, 14, 15 ) d'alimentation monophasée, qui alimente notamment la ligne de contact d'une ligne de chemin de fer à un réseau ( 1 ) d'alimentation triphasé,
- dans lequel au moins un transformateur ( 2, 16, 20, 21 ) est en liaison, du côté primaire, avec le réseau ( 1 ) d'alimentation et, du côté secondaire, avec la une ligne ( 4, 14, 15 ) d'alimentation monophasée et avec un point ( 10 ) de mise à la terre,
- dans lequel est en liaison avec la ligne ( 4, 14, 15 ) d'alimentation monophasée et avec le point ( 10 ) de mise à la terre un dispositif ( 8 ) d'équilibrage, qui est un convertisseur de circuit intermédiaire de tension triphasé à commutation automatique,
**caractérisé**
- **en ce qu'**il y a deux lignes ( 14, 15 ) d'alimentation monophasées séparées par un point ( 13 ) de séparation,
- et **en ce que** la première phase ( 7 ) du système ( 8 ) d'équilibrage est reliée à la première ligne ( 14 ) d'alimentation monophasée, la deuxième phase ( 11 ) du système ( 8 ) d'équilibrage à la deuxième ligne ( 15 ) d'alimentation monophasée et la troisième phase ( 12 ) du système ( 8 ) d'équilibrage au point ( 10 ) de mise à la terre.

3. Dispositif suivant la revendication 2, **caractérisé**
- **en ce qu'**il y a un transformateur qui est triphasé,
- et **en ce que** la première ( 17 ) des trois phases de sortie du transformateur ( 16 ) est reliée à la première ligne ( 14 ) d'alimentation monophasée, la deuxième ( 18 ) des trois phases de sortie du transformateur ( 16 ) à la deuxième ligne ( 15 ) d'alimentation monophasée et la troisième ( 19 ) des trois phases de sortie du transformateur ( 16 ) au point ( 10 ) de mise à la terre.

4. Dispositif suivant la revendication 3, **caractérisé**
- **en ce qu'**il n'y a qu'un transformateur ( 16 ) unique qui est triphasé.

5. Dispositif suivant la revendication 3, caractérisé
- en que qu'il y a au moins deux transformateurs ( 16 ) qui sont respectivement triphasés et montés en parallèle.

6. Dispositif suivant la revendication 2, **caractérisé**
- **en ce qu'**il y a deux transformateurs ( 20, 21 ) qui sont respectivement diphasés,
- et **en ce que** la première ( 22 ) de deux phases de sortie du premier transformateur ( 20 ) est reliée à la première ligne ( 14 ) d'alimentation monophasée et la première ( 23 ) de deux phases de sortie du deuxième transformateur ( 21 ) est reliée à la deuxième ligne ( 15 ) d'alimentation monophasée,
- et **en ce que**, de chaque transformateur ( 20, 21 ), respectivement la deuxième ( 24, 25 ) de deux phases de sortie est reliée au point ( 10 ) de mise à la terre.

7. Dispositif suivant la revendication 6, **caractérisé**
- **en ce qu'**au moins un autre transformateur diphasé est monté en parallèle à l'un ou à l'autre des deux transformateurs ( 20, 21 ) diphasés ou à respectivement les deux transformateurs ( 20, 21 ) diphasés.

8. Dispositif suivant l'une des revendications 1 à 7, **caractérisé**
- **en ce qu'**une charge ( 26 ) inductive et une charge ( 27 ) capacitive sont associées du côté de l'entrée au dispositif ( 8 ) d'équilibrage.

9. Dispositif suivant la revendication 8, **caractérisé**
- **en ce que** la charge ( 26 ) inductive est montée entre la deuxième phase ( 11 ) et la troisième phase ( 12 ) et la charge ( 27 ) capacitive entre la première phase ( 7 ) et la troisième phase ( 12 ) du dispositif ( 8 ) d'équilibrage.
